(19) **Europäisches Patentamt**

**European Patent Office**

**Office européen des brevets**

(11) **EP 1 189 511 B1**

(12) **EUROPEAN PATENT SPECIFICATION**

(45) Date of publication and mention
of the grant of the patent:
**03.11.2004 Bulletin 2004/45**

(21) Application number: **00943004.2**

(22) Date of filing: **21.06.2000**

(51) Int Cl.[7]: **A01N 43/82**, A01N 43/647,
A01N 43/713, A01N 43/653
// (A01N43/653, 25:30, 25:22,
25:04)

(86) International application number:
**PCT/US2000/017047**

(87) International publication number:
**WO 2000/078139 (28.12.2000 Gazette 2000/52)**

(54) **LIQUID HERBICIDE COMPOSITION**

FLÜSSIGE HERBIZIDZUSAMMENSETZUNG

COMPOSITION D'HERBICIDE LIQUIDE

(84) Designated Contracting States:
**AT BE CH CY DE DK ES FI FR GB GR IE IT LI LU
MC NL PT SE**

(30) Priority: **22.06.1999 JP 17516199**

(43) Date of publication of application:
**27.03.2002 Bulletin 2002/13**

(73) Proprietor: **FMC CORPORATION
Philadelphia, PA 19103 (US)**

(72) Inventors:
• **NAKAYAMA, Kazunari
Funabashi-shi, Ciba-ken (JP)**
• **KAMIHIRA, Chieko
Sakura-shi, Ciba-ken (JP)**

(74) Representative: **Gordon, Naoise Padhraic Edward
Murgitroyd & Company
165-169 Scotland Street
Glasgow G5 8PL (GB)**

(56) References cited:
**EP-A- 0 648 414          EP-A- 1 138 201
WO-A-99/51099          FR-A- 2 769 176
JP-A- 61 289 004          US-A- 5 935 905**

• **DATABASE CROPU [Online] Database
accession no. 1998-84906 XP002209367 & JP 10
045516 A (NISSAN CHEM IND LTD) 17 February
1998 (1998-02-17)**

**Description**

Field of the Invention

The present invention relates to a liquid composition, which contains carfentrazone-ethyl (common name) and has improved storage stability.

Background of the Invention

Carfentrazone-ethyl is a compound that acts as a herbicide for foliage treatment in upland farming, and exhibits excellent herbicidal activity against all harmful broadleaved weeds. Carfentrazone-ethyl degrades little and has good storage stability in solid compositions including granules, wettable granules, etc. However, in liquid compositions containing water as a medium, it is hydrolyzed by water. Therefore, improving the storage stability of carfentrazone-ethyl in such liquid compositions is much desired.

US Patent Specification No. 5,935,905 describes a herbicidal composition containing carfentrazone-ethyl and glyphosate which exhibits improved performance over a herbicide containing either active ingredient on its own. Similarly, Japanese Patent Specification No. 10 45516A describes a herbicidal composition containing carfentrazone-ethyl and glyphosate which exhibit a synergistic effect. European Patent Specification No. 0 648 414 describes a herbicidal composition in microemulsion form containing a surfactant system including an anionic surfactant.

International Patent Specification No WO 99/51099 describes a broad spectrum herbicidal composition comprising N-(phosphonomethyl) glycine or a salt thereof and a triazolinone herbicide, (namely carfentrazone-ethyl and sulfentrazone).

Summary of the Invention

According to the invention there is provided a liquid herbicide composition containing from 0.01 to 10 parts by weight relative to 100 parts by weight of the composition of carfentrazone-ethyl; from 1.0 to 60.0 parts by weight other agricultural active compounds; from 1 to 20 parts by weight of an anionic surfactant for improving the storage stability of the carfentrazone-ethyl; from 1 to 10 parts by weight of a water-soluble organic compound in which the water-soluble organic compound is a monoalcohol, polyalcohol, a glycol ether, an amine or an ether amine, water and having a pH of from 2 to 7.

The liquid herbicide composition has good storage stability since carfentrazone-ethyl is prevented from being degraded in storage.

DETAILED DESCRIPTION OF THE INVENTION

A liquid herbicide composition of the following [1] to [13] (hereinafter referred to as"the composition of the invention") has now been found in which carfentrazone-ethyl is prevented from being degraded in storage.

[1] A liquid herbicide composition containing from 0.01 to 10 parts by weight relative to 100 parts by weight of the composition of carfentrazone-ethyl; from 1.0 to 60.0 parts by weight other agricultural active compounds; from 1 to 20 parts by weight of an anionic surfactant for improving the storage stability of the carfentrazone-ethyl; from 1 to 10 parts by weight of a water-soluble organic compound in which the water-soluble organic compound is a monoalcohol, polyalcohol, a glycol ether, an amine or an ether amine, water and having a pH of from 2 to 7.

[2] The liquid herbicide composition of [1], containing from 5 to 10 parts by weight of an anionic surfactant.

[3] The liquid herbicide composition of [1] or [2] containing from 0.1 to 2.0 parts by weight of carfentrazone-ethyl.

[4] A liquid composition of [1] to [3] containing from 5.0 to 40.0 parts by weight of other agricultural active compounds.

[5] The liquid herbicide composition of [1] to [4] which has a viscosity of from 1 to 150 mPAS.

[6] The liquid herbicide composition of [1] to [5], which has a viscosity of from 1 to 100 mPAS.

[7] The liquid herbicide composition of [1] to [6], which has a pH of from 2 to 6.

[8] The liquid herbicide composition of [1] to [7], wherein an aqueous 5 wt.% solution of the anionic surfactant has a pH from 1 to 7.

[9] The liquid herbicide composition of [1] to [8], wherein the anionic surfactant is at least one selected from sulfate-type surfactants and phosphate-type surfactants.

[10] The liquid herbicide composition of [1] to [9], wherein the sulfate-type surfactant is at least one selected from polyoxyethylene monostyrylphenyl ether sulfates, polyoxyethylene distryrylphenyl ether sulfates and polyoxyethylene tristyrylphenyl ether sulfates, and their salts.

[11] The liquid herbicide composition of [9] or [10], wherein, the phosphate-type surfactant is at least one selected from polyoxyethylene monostyrylphenyl ether phosphates, polyoxyethylene distyrylphenyl ether phosphates and polyoxyethylene tristyrylphenyl ether phosphates and their salts.

[12] The liquid herbicide composition of [1] to [11], which is in the form of a suspension.

[13] The liquid herbicide composition of [12], which is in the form of a microemulsion.

To produce the composition of the invention, the components are gently mixed and stirred, and the composition thus produced could readily be in the form of a uniform liquid composition. To produce it, therefore, any conventional stirring machines can be used. To that effect, the composition has the advantage of productivity.
The anionic surfactant usable in the invention includes the following (a) to (d).

(a) Carboxylic acid-type surfactants:

For example, they include carboxylic acids such as polyacrylic acids, polymethacrylic acids, polymaleic acids, copolymers of maleic acid and olefins (e.g., isobutylene, diisobutylene, etc.), copolymers of acrylic acid and itaconic acid, copolymers of methacrylic acid and itaconic acid, copolymers of maleic acid and styrene, copolymers of acrylic acid and methacrylic acid, copolymers of acrylic acid and methyl acrylate, copolymers of acrylic acid and vinyl acetate, copolymers of acrylic acid and maleic acid, N-methyl-$(C_{12}-C_{18})$ fatty acid sarcosinates, resin acids, $(C_{12}-C_{18})$ fatty acids, etc.; and salts of such carboxylic acids.

(b) Sulfate-type surfactants:

For example, they include sulfates such as $(C_{12}-C_{18})$ alkyl sulfates, polyoxyethylene $(C_{12}-C_{18})$ alkyl ether sulfates, polyoxyethylene (mono or di)$(C_8-C_{12})$ alkylphenyl ether sulfates, sulfates of polymers of polyoxyethylene (mono or di)$(C_8-C_{12})$ alkylphenyl ethers, polyoxyethylene (mono, di or tri)phenylphenyl ether sulfates, polyoxyethylene (mono, di or tri)benzylphenyl ether sulfates, polyoxyethylene (mono, di or tri)styrylphenyl ether sulfates, sulfates of polymers of polyoxyethylene (mono, di or tri)styrylphenyl ethers, sulfates of polyoxyethylene-polyoxypropylene block polymers, sulfated oils, sulfated fatty acid esters, sulfated fatty acids, sulfated olefins, etc.; and salts of such sulfates.

(c) Sulfonic acid-type surfactants:

For example, they include sulfonic acids such as $(C_{12}-C_{22})$ paraffinsulfonic acids, $(C_8-C_{12})$ alkylbenzenesulfonic acids, formalin condensates with $(C_8-C_{12})$ alkylbenzenesulfonic acids, formalin condensates with cresolsulfonic acids, $(C_{14}-C_{16})$ a-olefinsulfonic acids, $(C_8-C_{12})$ dialkyl sulfosuccinic acids, lignin sulfonic acids, polyoxyethylene (mono or di)$(C_8-C_{12})$ alkylphenyl ether sulfonic acids, half esters of polyoxyethylene $(C_{12}-C_{18})$ alkyl ether sulfosuccinic acids, naphthalenesulfonic acids, (mono or di)$(C_1-C_6)$ alkylnaphthalenesulfonic acids, formalin condensates with naphthalenesulfonic acids, formalin condensates with (mono or di)$(C_1-C_6)$ alkylnaphthalenesulfonic acids, formalin condensates with creosote oil sulfonic acids, $(C_8-C_{12})$ alkyldiphenyl ether disulfonic acids, Igepon T (trade name), polystyrenesulfonic acids, copolymers of styrenesulfonic acid and methacrylic acid, etc.; and salts of such sulfonic acids.

(d) Phosphate-type surfactants:

For example, they include phosphates such as $(C_8-C_{12})$ alkyl phosphates, polyoxyethylene $(C_{12}-C_{18})$ alkyl ether phosphates, polyoxyethylene (mono or di)$(C_8-C_{12})$ alkylphenyl ether phosphates, phosphates of polymers of polyoxyethylene (mono, di or tri)$(C_8-C_{12})$ alkylphenyl ethers, polyoxyethylene (mono, di or tri)phenylphenyl ether phosphates, polyoxyethylene (mono, di or tri)benzylphenyl ether phosphates, polyoxyethylene (mono, di or tri)styrylphenyl ether phosphates, phosphates of polymers of polyoxyethylene (mono, di or tri)styrylphenyl ethers, phosphates of polyoxyethylene-polyoxypropylene block polymers, phosphatidyl cholines, phosphatidyl ethanolimines, polyphosphates (e.g., tripolyphosphate, etc.), etc.; and salts of such phosphates.

Salts of above (a) to (d) include those with alkali metals (lithium, sodium, potassium, etc.), alkaline earth metals (calcium, magnesium, etc.), ammonium and various amines (e.g., alkylamines, cycloalkylamines, alkanolamines, etc.), etc.

One or more of these surfactants can be used herein either singly or as combined. If desired, the anionic surfactant may be combined with any of nonionic surfactants and cationic surfactants.

Preferably, the anionic surfactant for use in the invention is such that its aqueous 5 wt.% solution has pH of from 1 to 7, more preferably from 1 to 5, in order to further improve the storage stability of carfentrazone-ethyl in the composition.

Also in order to further improve the storage stability of carfentrazone-ethyl in the composition, the anionic surfactant is preferably selected from sulfate-type surfactants and phosphate-type surfactants, including, for example, acids such as polyoxyethylene monostyrylphenyl ether sulfates, polyoxyethylene distyrylphenyl ether sulfates, polyoxyethylene tristyrylphenyl ether sulfates, polyoxyethylene monostyrylphenyl ether phosphates, polyoxyethylene distyrylphenyl ether phosphates, polyoxyethylene tristyrylphenyl ether phosphates, etc., and their salts. Of those, more preferred are polyoxyethylene distyrylphenyl ether sulfates, polyoxyethylene tristyrylphenyl ether sulfates, polyoxyethylene distyrylphenyl ether phosphates and polyoxyethylene tristyrylphenyl ether phosphates, and their salts. Even more preferred are polyoxyethylene tristyrylphenyl ether sulfates and polyoxyethylene tristyrylphenyl ether phosphates, and their salts.

The water-soluble organic compound to be used in the invention is chosen amongst monoalcohols, polyalcohols, glycol ethers, amines and ether amines. Of those, preferred are polyalcohols and glycol ethers. They include, for example, ethylene glycol, propylene glycol, diethylene glycol, hexylene glycol, polyethylene glycol and polypropylene glycol; polyglycols such as glycerin, etc.; glycol ethers such as propyl cellosolve, butyl cellosolve, phenyl cellosolve, propylene glycol monomethyl ether, propylene glycol monoethyl ether, propylene glycol monopropyl ether, propylene glycol monobutyl ether, propylene glycol monophenyl ether, etc. Of these, more preferred are glycols. Even more preferred are ethylene glycol, propylene glycol and diethylene glycol.

The composition of the invention may optionally contain any other agricultural active compounds, for example, phenoxyacetic acid-type compounds, organic phosphorus-containing herbicides, sulfonylurea-type compounds, etc.

The organic phosphorus-containing herbicides include, for example, glyphosate (common name) and its salts (sodium salt, trimesium salt, ammonium salt, etc.), glufosinate (common name) and its salts (sodium salt, trimesium salt, isopropylamine salt, etc.), and bilanafos (common name) and its salts (isopropylamine salt, trimesium salt, ammonium salt, etc.), etc.

The phenoxyacetic acid-type compounds include, for example, 2,4-D (common name), MCPA (common name), MCPB (common name), etc.

The sulfonylurea-type compounds include, for example, pyrazosulfuron ethyl (common name), halosulfuron methyl (common name), benzulfuron methyl (common name), imazosulfuron (common name), azimsulfuron (common name), cinosulfuron (common name), cyclosulfamuron (common name), thifensulfuron-methyl (common name), flazasulfuron (common name), metsulfuron-methyl (common name), ethoxysulfuron (common name), etc.

The pH of the composition of the invention falls between 2 and 7. However, in order to further improve the storage stability of carfentrazone-ethyl therein, its pH preferably falls between 2 and 6, more preferably between 2 and 5.

For controlling the pH of the composition of the invention, for example, employable is a method of adding a predetermined amount of any of various inorganic or organic acids, such as hydrochloric acid, sulfuric acid, phosphoric acid, sulfonic acids and carboxylic acids, or their salts or esters, to the liquid herbicide composition. Concretely, the organic acids include acid phosphoric esters, citric acid, maleic acid, sorbic acid, lactic acid, tartaric acid, etc. As the case may be, a predetermined amount of a buffer, such as an aqueous solution of disodium hydrogenphosphate-citric acid, an aqueous solution of sodium acetate-hydrochloric acid, an aqueous solution of formic acid-sodium formate, an aqueous solution of lactic acid-sodium lactate, an aqueous solution of tartaric acid-sodium tartrate, an aqueous solution of sodium citrate-hydrochloric acid or the like, may be added thereto to control the pH of the composition.

The pH of the liquid herbicide composition is measured with a glass electrode-type pH meter, at 25°C. To measure it, used is a thick liquid of the composition.

The viscosity of the composition of the invention is not specifically defined. In view of the easiness in actually handling the composition, its viscosity preferably falls between 1 and 150 mPas, more preferably between 1 and 100 mPas, most preferably between 1 and 50 mPas.

The viscosity of the liquid herbicide composition is measured with a Brookfield viscometer (Model DV-III from Brookfield) equipped with a No. 3 rotor, at 30 rpm and at 25°C. To measure it, used is a thick liquid of the composition.

The form of the composition of the invention is not specifically defined, so far as it is liquid. Preferably, however, the composition is in the form of a suspension. The suspension referred to herein is meant to include a flowable preparation (SC, suspension concentrate), an emulsion in water (EW), a suspoemulsion (SE), a microemulsion (ME), and a multiple emulsion, as so described in *Guide to Agricultural Compositions* (edited by the members in the Section for the Study of Agricultural Compositions and Their Applications of the Japan Agricultural Chemical Society, published by the Japan Plant Epidemics Prevention Association, 1997). Of those, more preferred is a microemulsion.

Various adjuvants may be in the composition of the invention, including, for example, thickeners, defoaming agents, preservatives, colorants, etc.

The invention is described concretely with reference to the following Examples and Test Example, which, however, are not intended to restrict the scope of the invention.

In the following, parts are all by weight. Carfentrazone-ethyl is referred to as Compound A; N-(phosphonomethyl)glycine isopropylammonium salt is as Compound B; and N-(phosphonomethyl)glycine trimethylsulfonium salt is as Compound C.

Example 1

1.0 part of Compound A was dissolved in 2.0 parts of phenylxylethane. To the resulting solution, were added 2.0 parts of POE alkyl ether (Pegnol TH-8 from Toho Chemical), 5.0 parts of POE tristyrylphenyl ether phosphate (Soprophr 3D33 from Rhone-Poulenc, its aqueous 5 wt.% solution has pH of from 1.5 to 3), 20.0 parts of ethylene glycol and 70.0 parts of distilled water, and stirred to prepare a clear microemulsion. Its pH was 3.1, and its viscosity was 27 mPas.

Example 2

1.0 part of Compound A was dissolved in 2.0 parts of phenylxylethane. To the resulting solution, were added 20.0 parts of Compound B, 20.0 parts of quaternary ammonium salt (NK-3000S from Takemoto Yushi), 5.0 parts of POE tristyrylphenyl ether phosphate (Soprophr 4D384 from Rhone-Poulenc, its aqueous 5 wt.% solution has pH of from 2 to 4), 20.0 parts of ethylene glycol and 32.0 parts of distilled water, and stirred to prepare a clear microemulsion. Its pH was 4.9, and its viscosity was 18 mPas.

Example 3

1.0 part of Compound A was dissolved in 2.0 parts of phenylxylethane. To the resulting solution, were added 10.0 parts of Compound C, 6.0 parts of alkyl-beef tallow amine (Naimeen T-2 from Nippon Yushi), 5.0 parts of POE tristyrylphenyl ether phosphate (Soprophr 4D384 from Rhone-Poulenc, its aqueous 5 wt.% solution has pH of from 2 to 4), 20.0 parts of ethylene glycol and 32.0 parts of distilled water, and stirred to prepare a clear microemulsion. Its pH was 4.5, and its viscosity was 28 mPas.

Example 4

1.0 part of Compound A was dissolved in 2.0 parts of phenylxylethane, which was then absorbed by 3.0 parts of white carbon (Carplex #80D from Shionogi Seiyaku). This was milled in an air mill. To this were added 10.0 parts of Compound C, 6.0 parts of alkyl-beef tallow amine (Naimeen T-2 from Nippon Yushi), 5.0 parts of POE tristyrylphenyl ether phosphate (Soprophr 4D384 from Rhone-Poulenc, its aqueous 5 wt.% solution has pH of from 2 to 4), 20.0 parts of ethylene glycol, 10 parts of aqueous 1 % solution of xanthane rubber, and 43.0 parts of distilled water, and stirred to prepare an emulsion. Its pH was 4.9, and its viscosity was 96 mPas.

Example 5

0.3 parts of Compound A was dissolved in 2.0 parts of phenylxylethane. To the resulting solution, were added 10.0 parts of POE tristyrylphenyl ether phosphate (Soprophr 4D384 from Rhone-Poulenc, its aqueous 5 wt.% solution has pH of from 2 to 4), 20.0 parts of propylene glycol and 67.7 parts of distilled water, and stirred to prepare a clear microemulsion. Its pH was 2.8, and its viscosity was 15 mPas.

Comparative Example 1

1.0 part of Compound A was dissolved in 2.0 parts of phenylxylethane. To the resulting solution, were added 20.0 parts of Compound B, 20.0 parts of quaternary ammonium salt (NK-3000S from Takemoto Yushi), 10.0 parts of POE alkyl ether (Pegnol TH-8 from Toho Chemical), 20.0 parts of ethylene glycol and 27.0 parts of distilled water, and stirred to prepare a clear microemulsion. Its pH was 4.9, and its viscosity was 28 mPas.

Comparative Example 2

1.0 part of Compound A was dissolved in 2.0 parts of phenylxylethane. To the resulting solution, were added 20.0 parts of Compound B, 30.0 parts of POE tristyrylphenyl ether (Sorpol T-20 from Toho Chemical), 10.0 parts of ethylene glycol and 37.0 parts of distilled water, and stirred. However, this separated into two layers, and could not form a uniform liquid composition.

Comparative Example 3

1.0 part of Compound A was dissolved in 2.0 parts of phenylxylethane. To the resulting solution, were added 20.0 parts of Compound B, 30.0 parts of quaternary ammonium salt (NK-3000S from Takemoto Yushi), 10.0 parts of ethylene glycol and 37.0 parts of distilled water, and stirred. However, this separated into two layers, and could not form a uniform liquid composition.

Test Example

The compositions prepared in the above-mentioned Examples and Comparative Examples were separately put into different laboratory glass bottles all equipped with a stopper, and stored in a thermostat at 50°C for 10 days. After having been thus stored, they were analyzed for the active compound through reversed-phase high-performance liquid chromatography. The data obtained are given in Table 1. The degradation rate of the active compound in each sample was calculated according to the following formula:

$$\text{Degradation Rate (\%)} = (1 - a/b) \times 100$$

In the formula, "a" indicates the active compound content (%) of the stored sample; and "b" indicates the active compound content (%) of the fresh sample.

Table 1

| No. | Anionic Surfactant | Degradation Rate of Compound A | Degradation Rate of Compound B or C |
|---|---|---|---|
| Example 1 | contained | 10.1 % | - |
| Example 2 | contained | 6.7 % | 1.2 % |
| Example 3 | contained | 5.9 % | 2.2 % |
| Example 4 | contained | 11.2 % | 1.2 % |
| Example 5 | contained | 12.1 % | - |
| Comp. Example 1 | not contained | 48.3 % | 1.5 % |

As in Table 1, the degradation rate of Compound A in the compositions of Examples 1 to 5 all containing an anionic surfactant was smaller than that in the composition of Comparative Example 1 not containing an anionic surfactant.

In the composition of the present invention, carfentrazone-ethyl is prevented from being degraded in storage, and the composition has good storage stability. To produce the composition, the components are gently mixed and stirred, and the composition thus produced could be readily in the form of a uniform liquid composition. To produce it, therefore, any conventional stirring machines can be used. To that effect, the composition has the advantage of productivity.

**Claims**

1. A liquid herbicide composition containing from 0.01 to 10 parts by weight relative to 100 parts by weight of the composition of carfentrazone-ethyl; from 1.0 to 60.0 parts by weight other agricultural active compounds; from 1 to 20 parts by weight of an anionic surfactant for improving the storage stability of the carfentrazone-ethyl; from 1 to 10 parts by weight of a water-soluble organic compound in which the water-soluble organic compound is a monoalcohol, polyalcohol, a glycol ether, an amine or an ether amine, water and having a pH of from 2 to 7.

2. The liquid herbicide composition as claimed in Claim 1, containing from 5 to 10 parts by weight of an anionic surfactant.

3. The liquid herbicide composition as claimed in Claim 1 or Claim 2 containing from 0.1 to 2.0 parts by weight of carfentrazone-ethyl.

4. A liquid composition as claimed in any of Claims 1 to 3 containing from 5.0 to 40.0 parts by weight of other agricultural active compounds.

5. The liquid herbicide composition as claimed in any of Claims 1 to 4 which has a viscosity of from 1 to 150 mPAS.

6. The liquid herbicide composition as claimed in any of Claims 1 to 5, which has a viscosity of from 1 to 100 mPAS.

7. The liquid herbicide composition as claimed in any of Claims 1 to 6, which has a pH of from 2 to 6.

8. The liquid herbicide composition as claimed in any of Claims 1 to 7, wherein an aqueous 5 wt.% solution of the anionic surfactant has a pH from 1 to 7.

9. The liquid herbicide composition as claimed in any of Claims 1 to 8, wherein the anionic surfactant is at least one selected from sulfate-type surfactants and phosphate-type surfactants.

10. The liquid herbicide composition as claimed in Claim 9, wherein the sulfate-type surfactant is at least one selected from polyoxyethylene monostyrylphenyl ether sulfates, polyoxyethylene distryrylphenyl ether sulfates and polyoxyethylene tristyrylphenyl ether sulfates, and their salts.

11. The liquid herbicide composition as claimed in Claim 9 or Claim 10, wherein, the phosphate-type surfactant is at least one selected from polyoxyethylene monostyrylphenyl ether phosphates, polyoxyethylene distyrylphenyl ether phosphates and polyoxyethylene tristyrylphenyl ether phosphates and their salts.

12. The liquid herbicide composition as claimed in any of Claims 1 to 11, which is in the form of a suspension.

13. The liquid herbicide composition as claimed in Claim 12, which is in the form of a microemulsion.

**Patentansprüche**

1. Eine flüssige Herbizidzusammensetzung, die zwischen 0,01 und 10 Gewichtsteile relativ zu 100 Gewichtsteilen der Zusammensetzung von Carfentrazonethyl; zwischen 1,0 und 60,0 Gewichtsteile anderer aktiver Pflanzenschutzverbindungen; zwischen 1 und 20 Gewichtsteile eines anionischen Tensids zur Verbesserung der Lagerstabilität des Carfentrazonethyls; zwischen 1 und 10 Gewichtsteile einer wasserlöslichen organischen Verbindung, wobei die wasserlösliche organische Verbindung ein Monoalkohol, Polyalkohol, ein Glycolether, ein Amin oder ein Etheramin, Wasser ist und einen pH-Wert zwischen 2 und 7 aufweist, enthält.

2. Flüssige Herbizidzusammensetzung gemäß Anspruch 1, die zwischen 5 und 10 Gewichtsteile eines anionischen Tensids enthält.

3. Flüssige Herbizidzusammensetzung gemäß Anspruch 1 oder Anspruch 2, die zwischen 0,1 und 2,0 Gewichtsteile Carfentrazonethyl enthält.

4. Flüssige Herbizidzusammensetzung gemäß einem der Ansprüche 1 bis 3, die zwischen 5,0 und 40,0 Gewichtsteile anderer aktiver Pflanzenschutzverbindungen enthält.

5. Flüssige Herbizidzusammensetzung gemäß einem der Ansprüche 1 bis 4, die eine Viskosität von zwischen 1 und 150 mPas aufweist.

6. Flüssige Herbizidzusammensetzung gemäß einem der Ansprüche 1 bis 5, die eine Viskosität von zwischen 1 und 100 mPas aufweist.

**7.** Flüssige Herbizidzusammensetzung gemäß einem der Ansprüche 1 bis 6, die einen pH-Wert von zwischen 2 und 6 aufweist.

**8.** Flüssige Herbizidzusammensetzung gemäß einem der Ansprüche 1 bis 7, wobei eine wässrige Lösung von 5 Gew.-% des anionischen Tensids einen pH-Wert zwischen 1 und 7 aufweist.

**9.** Flüssige Herbizidzusammensetzung gemäß einem der Ansprüche 1 bis 8, wobei das anionische Tensid mindestens eines ist, das aus sulfatartigen Tensiden und phosphatartigen Tensiden ausgewählt ist.

**10.** Flüssige Herbizidzusammensetzung gemäß Anspruch 9, wobei das sulfatartige Tensid mindestens eines ist, das aus Polyoxyethylen-Monostyrylphenyl-Ethersulfaten, Polyoxyethylen-Distyrylphenyl-Ethersulfaten und Pofyoxyethylen-Tristyryiphenyl-Ethersulfaten und ihren Salzen ausgewählt ist.

**11.** Flüssige Herbizidzusammensetzung gemäß Anspruch 9 oder Anspruch 10, wobei das phosphatartige Tensid mindestens eines ist, das aus Polyoxyethylen-Monostyrylphenyl-Etherphosphaten, Polyoxyethylen-Distyrylphenyl-Etherphosphaten und Polyoxyethylen-Tristyrylphenyl-Etherphosphaten und ihren Salzen ausgewählt ist.

**12.** Flüssige Herbizidzusammensetzung gemäß einem der Ansprüche 1 bis 11, die die Form einer Suspension aufweist.

**13.** Flüssige Herbizidzusammensetzung gemäß Anspruch 12, die die Form einer Mikroemulsion aufweist.

**Revendications**

**1.** Une composition d'herbicide liquide contenant de 0,01 à 10 parties en poids par rapport à 100 parties en poids de la composition de carfentrazone-éthyle ; de 1,0 à 60,0 parties en poids d'autres composés actifs agricoles ; de 1 à 20 parties en poids d'un tensioactif anionique destiné à améliorer la stabilité au stockage du carfentrazone-éthyle ; de 1 à 10 parties en poids d'un composé organique soluble dans l'eau dans laquelle le composé organique soluble dans l'eau est un monoalcool, un polyalcool, un éther glycol, une amine ou un éther amine, de l'eau et ayant un pH allant de 2 à 7.

**2.** La composition d'herbicide liquide telle que revendiquée dans la revendication 1, contenant de 5 à 10 parties en poids d'un tensioactif anionique.

**3.** La composition d'herbicide liquide telle que revendiquée dans la revendication 1 ou la revendication 2 contenant de 0,1 à 2,0 parties en poids de carfentrazone-éthyle.

**4.** Une composition liquide telle que revendiquée dans n'importe lesquelles des revendications 1 à 3 contenant de 5,0 à 40,0 parties en poids d'autres composés actifs agricoles.

**5.** La composition d'herbicide liquide telle que revendiquée dans n'importe lesquelles des revendications 1 à 4, laquelle a une viscosité allant de 1 à 150 mPAS.

**6.** La composition d'herbicide liquide telle que revendiquée dans n'importe lesquelles des revendications 1 à 5, laquelle a une viscosité allant de 1 à 100 mPAS.

**7.** La composition d'herbicide liquide telle que revendiquée dans n'importe lesquelles des revendications 1 à 6, laquelle a un pH allant de 2 à 6.

**8.** La composition d'herbicide liquide telle que revendiquée dans n'importe lesquelles des revendications 1 à 7, dans laquelle une solution aqueuse de 5 % en poids du tensioactif anionique a un pH allant de 1 à 7.

**9.** La composition d'herbicide liquide telle que revendiquée dans n'importe lesquelles des revendications 1 à 8, dans laquelle le tensioactif anionique est au moins un tensioactif sélectionné parmi les tensioactifs de type sulfate et les tensioactifs de type phosphate.

**10.** La composition d'herbicide liquide telle que revendiquée dans la revendication 9, dans laquelle le tensioactif de type sulfate est au moins un sulfate sélectionné parmi les sulfates d'éther de polyoxyéthylène monostyrylphényl, les sulfates d'éther de polyoxyéthylène distyrylphényl et les sulfates d'éther de polyoxyéthylène tristyrylphényl, et leurs sels.

11. La composition d'herbicide liquide telle que revendiquée dans la revendication 9 ou la revendication 10, dans laquelle le tensioactif de type phosphate est au moins un phosphate sélectionné parmi les phosphates d'éther de polyoxyéthylène monostyrylphényl, les phosphates d'éther de polyoxyéthylène distyrylphényl et les phosphates d'éther de polyoxyéthylène tristyrylphényl, et leurs sels.

12. La composition d'herbicide liquide telle que revendiquée dans n'importe lesquelles des revendications 1 à 11, laquelle est sous la forme d'une suspension.

13. La composition d'herbicide liquide telle que revendiquée dans la revendication 12, laquelle est sous la forme d'une microémulsion.